# EUROPÄISCHE PATENTSCHRIFT

(11) **EP 0 318 459 B1**
(45) Veröffentlichungstag und Bekanntmachung des Hinweises auf die Patenterteilung: **31.03.1993**
(21) Anmeldenummer: 88890290.5
(22) Anmeldetag: 17.11.1988
(51) Int. Cl.: B66F 7/14, F16H 37/12, F16H 25/20, B66F 3/18

(54) **Spindelantrieb**
Spindle drive
Commande de broche

(30) Priorität: 26.11.1987 AT 3111/87
(43) Veröffentlichungstag der Anmeldung: 31.05.1989
(73) Patentinhaber: VOEST-ALPINE INDUSTRIEANLAGENBAU GMBH, 4020 Linz (AT)
(72) Erfinder: Schertler, Armin, Dipl.-Ing., A-1232 Wien (AT); Pollack, Friedrich, A-1140 Wien (AT)
(74) Vertreter: Wolfram, Gustav, Dipl.-Ing.

(56) Entgegenhaltungen:
- CA-A- 983 004
- FR-A- 740 279
- FR-A- 2 377 964
- GB-A- 2 112 495
- US-A- 1 332 823
- US-A- 1 366 402

## Beschreibung

Die Erfindung betrifft einen Spindelantrieb mit einer Spindel und einer Mutter, wobei einer dieser beiden Teile mittels eines Antriebes antreibbar und der andere Teil in Richtung der Achse der Spindel in eine Endposition bewegbar ist, der in axialer Richtung bewegbare Teil an einer Verdrehsicherung geführt ist und eine Schaltkupplung im Kraftfluß zwischen der Verdrehsicherung und dem Antrieb eingebaut ist, wobei
- die Schaltkupplung eine Außenhülse aufweist, die mit zwei an ihr unverdrehbar angeordneten Sägezahnringen versehen ist, deren Sägeverzahnungen einander entgegengesetzt gerichtet sind und mit in entgegengesetzter Drehrichtung sperrenden Sägezähnen ausgestattet sind,
- die Schaltkupplung weiters einen innerhalb der Außenhülse liegende Innenteil aufweist, mit dem zwei Gegen-Sägezahnringe mit jeweils einer zu einer der Sägeverzahnungen der Sägezahnringe in und außer Eingriff bringbaren Gegen-Sägeverzahnung unverdrehbar verbunden sind,
- jede der beiden Gegen-Sägeverzahnungen mit den zugehörigen Sägeverzahnungen mittels elastischer Mittel in Eingriffstellung gepreßt ist und
- entweder einer der Sägezahnringe oder einer der Gegen-Sägezahnringe mit einem Anschlag bei sich einer Endposition näherndem axial beweglichen Teil aus der Eingriffstellung in Richtung der Achse der Spindel bis in eine Außer-Eingriffstellung verschiebbar ist.

Bei Spindelantrieben schwerer Bauart sind zum Schutz gegen Zerstörung bei Erreichen der Endlage mechanisch betätigte oder berührungslose elektrische Endschalter vorgesehen. Bei Versagen dieser Endschalter oder bei Einstellungsfehlern (bei der Montage) kann es jedoch vorkommen, daß die Spindel bzw. Mutter weiter angetrieben wird und der Spindelantrieb durch die Wirkung der rotatorischen Massen zerstört wird.

Um dies zu vermeiden, ist es bekannt, den Antrieb mit einer Reibungskupplung auszustatten, die in Funktion tritt, wenn der sich axial bewegende Teil seine Endlage erreicht. Eine Vorrichtung dieser Art ist jedoch nur für sehr geringe Leistungen zu verwirklichen, wobei die Gefahr gegeben ist, daß der unter Last stehende axial bewegliche Teil durch die Last verschoben wird, so daß die Last abstürzt.

Es ist weiters bekannt, zwischen dem Antrieb und dem drehbaren Teil Schaltkupplungen vorzusehen. Solche Schaltkupplungen können für größere Lasten eingesetzt werden, bergen jedoch ebenfalls beim Aus rücken die Gefahr eines Lastabsturzes in sich.

Ein Spindelantrieb der eingangs beschriebenen Art ist aus der US-A - 2,743,623 bekannt. Bei diesem Spindelantrieb ist die Schaltkupplung mit der Mutter vereint und bildet mit ihr eine Baueinheit, wobei die Mutter selbst bzw. Teile der Mutter für die Funktion der Schaltkupplung herangezogen werden.

Die Erfindung stellt sich die Aufgabe, einen Spindelantrieb der eingangs beschriebenen Art zu schaffen, der trotz kompakter platzsparender und einfach herzustellender Bauweise für hohe Leistungen bzw. große Lasten einsetzbar ist, wobei auch bei Erreichen der Endlagen des sich axial bewegenden Teiles die Last vor einem Abstürzen gesichert ist und sich der axial bewegende Teil unter Einwirkung der Last nicht selbsttätig bewegen kann.

Diese Aufgabe wird erfindungsgemäß dadurch gelöst, daß die Schaltkupplung als eigene integrale, von der Außenhülse und dem Innenteil begrenzte Baueinheit ausgebildet ist, wobei die Gegensägezahnringe am Innenteil entweder längsverschieblich geführt oder an diesem befestigt sind.

Die erfindungsgemäße Schaltkupplung erlaubt ein Sperren während der regulären Hubbewegung und ermöglicht ein freies Durchdrehen des Antriebes bei Erreichen einer Endposition in die eine Antriebsrichtung und ein freies Durchdrehen des Antriebes in die andere Richtung bei Erreichen der zweiten Endposition, wobei jedoch in den beiden letzten Fällen bei einer Drehrichtungsumkehr die Kupplung sperrt. Dieses Sperren bewirkt, daß die sich im gehobenen Zustand befindliche Last bei Verwendung von nicht selbstsperrenden Spindeln nicht abstürzt, sondern im gehobenen Zustand verbleibt.

Eine einfach herzustellende Ausführungsform ist dadurch gekennzeichnet, daß die Schaltkupplung am in axialer Richtung bewegbaren Teil zwischen diesem und der Verdrehsicherung angeordnet ist, wobei zweckmäßig die Außenhülse an einem den Spindelantrieb umgebenden zylindrischen Gehäuse über im Inneren des Gehäuses angeordnete, die Verdrehsicherung bildende Federn oder Nuten geführt ist.

Vorzugsweise weist das Gehäuse einen Boden und einen Deckel auf und ist im Boden und/oder im Deckel ein mit dem Anschlag in Kontakt gelangender Anlaufring vorgesehen.

Gemäß einer bevorzugten Variante ist der drehbare Teil die Mutter und der in axialer Richtung bewegbare Teil die Spindel, wobei vorteilhaft die Schaltkupplung ortsfest angeordnet ist und ein den Anschlag kontaktierender Gegenanschlag von einem Ende der Spindel und ein weiterer, den zweiten Anschlag kontaktierender zweiter Gegenanschlag von einer an der Spindel in axialer Richtung verschiebbar gelagerten Betätigungsstange gebildet wird, die an der Spindel zwischen zwei im dem Hub der Spindel entsprechenden Abstand liegenden Endpositionen verschiebbar ist.

Eine weitere zweckmäßige Ausführungsform ist dadurch gekennzeichnet, daß der drehbare Teil die Spindel und der axial bewegbare Teil die Mutter ist, wobei es von Vorteil ist, wenn die Außenhülse der Schaltkupplung drehfest mit einem Antriebszahnrad verbunden ist und der Innenteil der Schaltkupplung von einem die Spindel in axialer Richtung verlängernden Endteil gebildet ist und daß ein einen Anschlag kontaktierender Gegenanschlag an der Mutter und ein einen weiteren Anschlag kontaktierender Gegenanschlag von einer mittels der Mutter betätigten Betätigungseinrichtung gebildet ist.

Eine bevorzugte Ausführungsform ist dadurch gekennzeichnet, daß die Außenhülse mindestens einen zwischen den an beiden Enden angeordneten Flanschen liegenden Mittelflansch aufweist, mit dem sie am Innenteil verdrehbar, jedoch axial unverschiebbar gelagert ist, wobei vorteilhaft der Mittelflansch zweigeteilt ausgebildet ist und einen am Innenteil starr angeordneten Gegen-Mittelflansch beiderseitig umschließt und wobei weiters zweckmäßig die Außenhülse aus vier miteinander in axialer Richtung verspannten Bauteilen gebildet ist, von dem einer einen ersten Flansch, einer einen ersten Mittelflansch, einer einen zweiten Mittelflansch und einer einen zweiten Endflansch trägt.

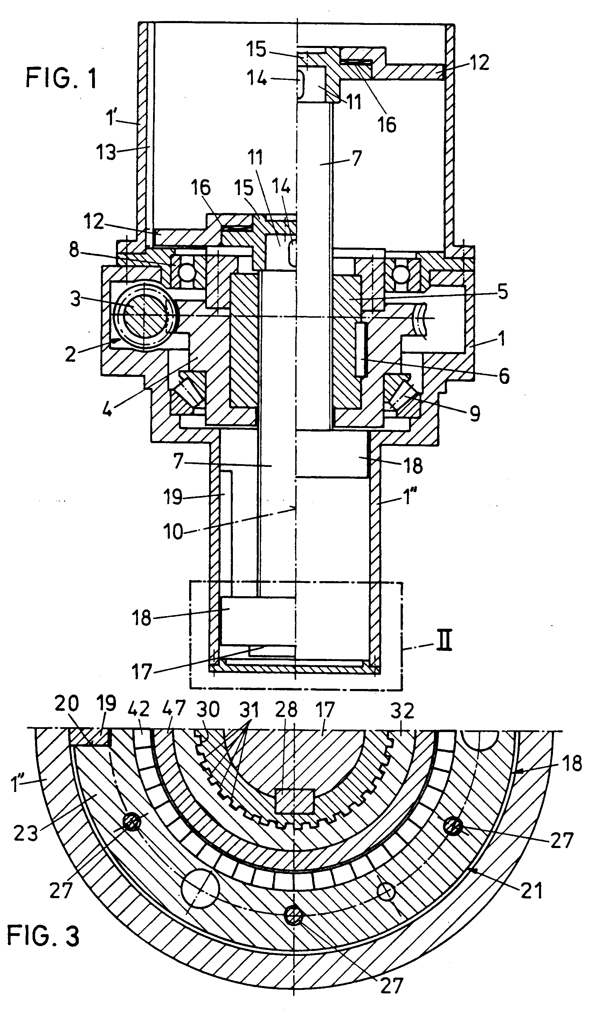

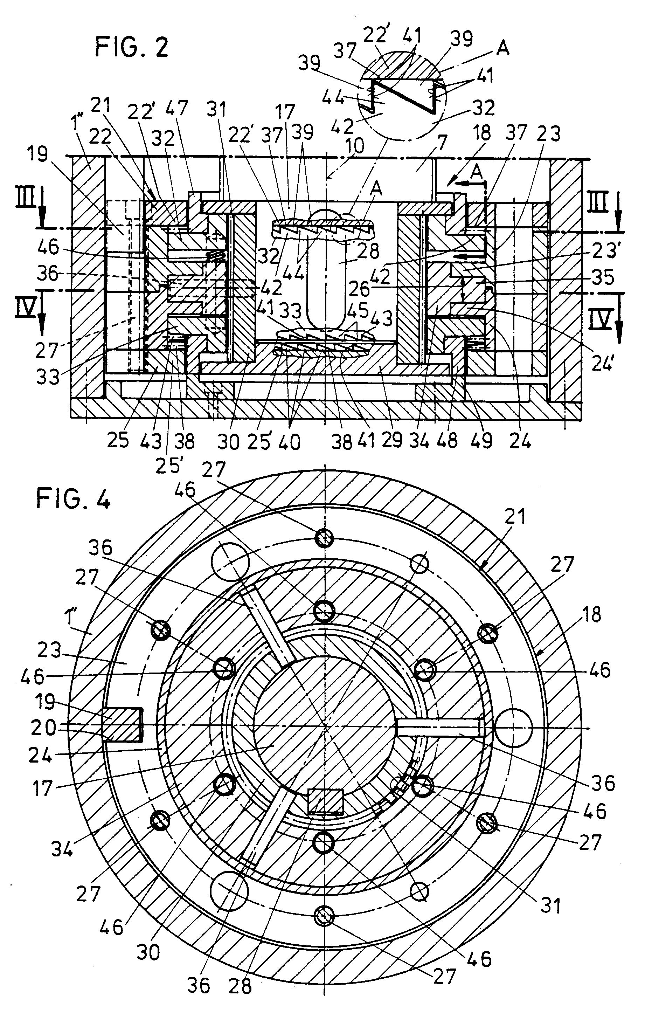

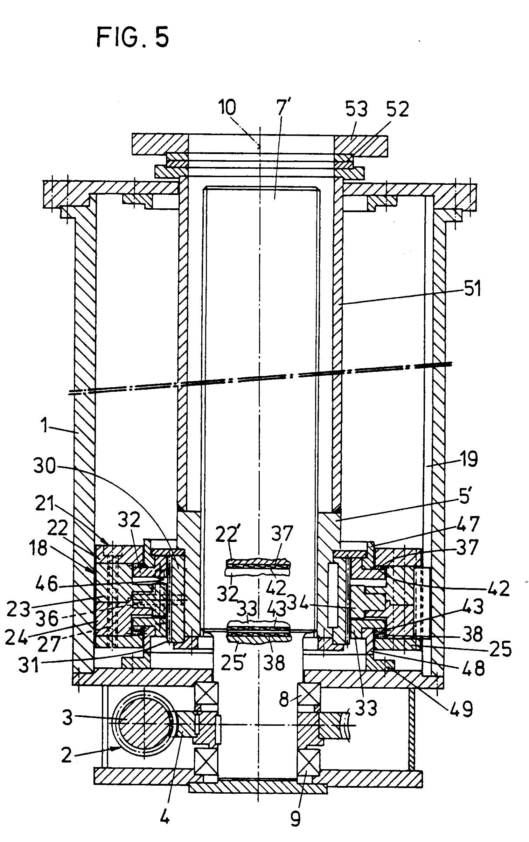

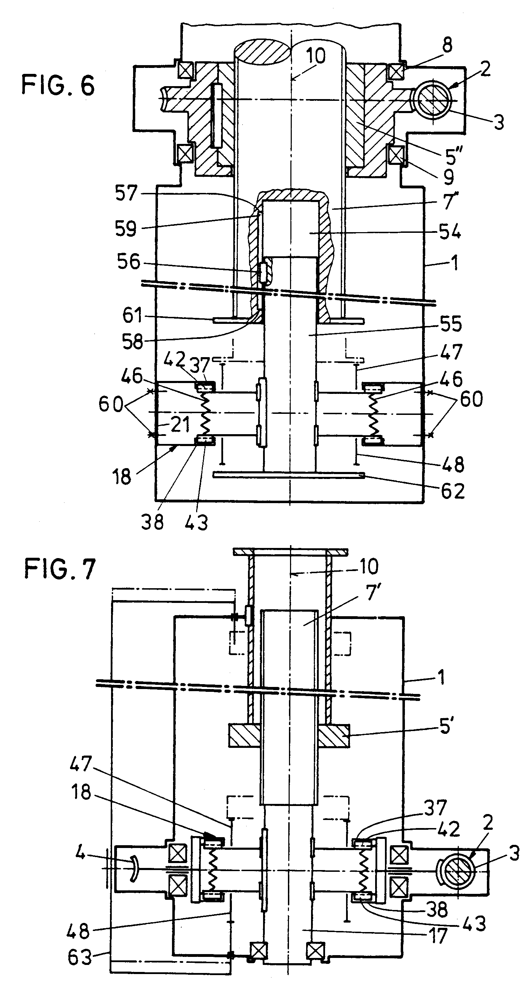

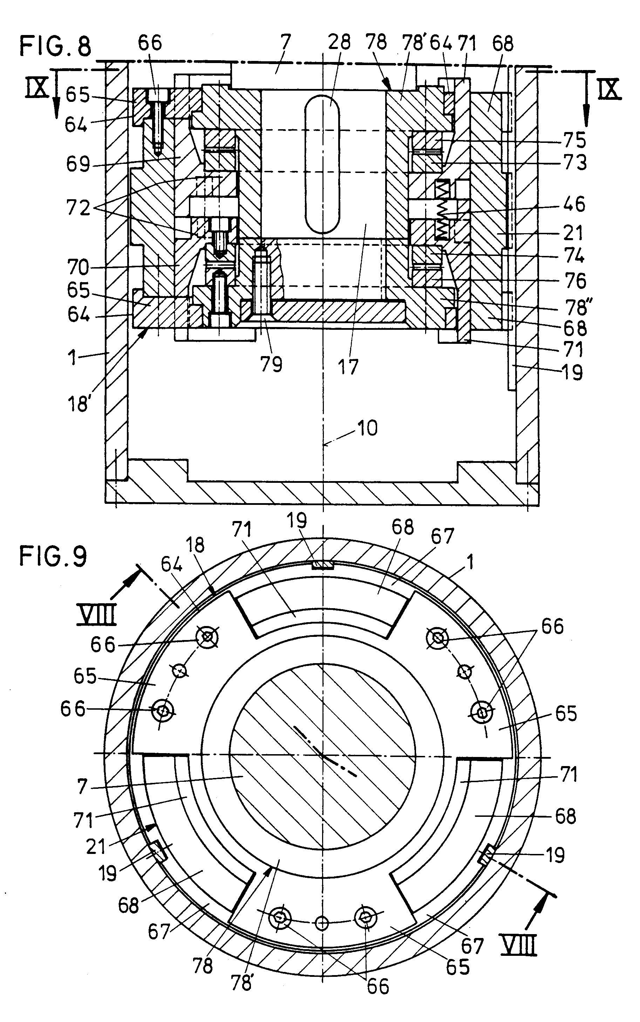

Die Erfindung ist nachstehend anhand der Zeichnung an mehreren Ausführungsbeispielen näher erläutert, wobei Fig. 1 eine schematische, teilweise geschnittene Gesamtansicht des Spindelantriebes nach einer ersten Ausführungsform zeigt. In Fig. 2 ist das Detail II der Fig. 1 im vergrößerten Maßstab und im Schnitt veranschaulicht. Die Fig. 3 und 4 zeigen gemäß den Linien III-III und IV-IV der Fig. 2 geführte Schnitte. Fig. 5 stellt eine GesamtSchnittdarstellung durch einen Spindelantrieb gemäß einer zweiten Ausführungsform dar. Die Fig. 6 und 7 zeigen in schematischer Darstellung zwei weitere Varianten des Spindelantriebes. In Fig. 8 ist in zu Fig. 2 analoger Darstellung eine abgeänderte Ausführungsform veranschaulicht. Fig. 9 zeigt einen Schnitt gemäß der Linie IX-IX der Fig. 8.

Gemäß der in den Fig. 1 bis 4 dargestellten Ausführungsform weist der Spindelantrieb ein in einem Gehäuse 1 gelagertes Schneckengetriebe 2 auf, dessen Schnecke 3 von einem nicht dargestellten Antriebsmotor antreibbar ist. In dem Schneckenrad 4 ist eine Mutter 5 mit einer Paßfeder 6 drehfest angeordnet, die von einer vertikal ausgerichteten Spindel 7 durchsetzt wird. Das Schneckenrad 4 ist über zwei Lager 8, 9 im Gehäuse 1 drehbar und in Richtung der Achse 10 der Spindel 7 unverschiebbar gelagert.

Am oberen Ende 11 der Spindel 7 ist diese mit einer Lastauflage 12, die gegenüber einem Oberteil 1′ des Gehäuses 1 mittels mindestens einer Feder 13 gegen Verdrehen gesichert ist, zum Heben und Senken einer schweren Last versehen. Die Lastauflage 12 ist an einem am oberen Ende 11 der Spindel 7 mittels einer Paßfeder 14 drehfest verbundenen Stützteil 15 über ein Axiallager 16 drehbar abgestützt, so daß die Spindel 7 gegenüber der Lastaufnahme 12 eine Drehbewegung durchführen kann.

An einem unteren Endteil 17 der Spindel ist eine generell mit 18 bezeichnete Schaltkupplung angeordnet, deren eine Kupplungshälfte gegenüber dem unteren Endteil 17 der Spindel 7 unverdrehbar befestigt ist und deren andere Kupplungshälfte gegenüber dem Gehäuseunterteil 1" über eine oder mehrere sich in Richtung der Achse 10 der Spindel 7 erstreckende Federn 19 gegen Verdrehen gesichert ist.

Durch Antreiben der Mutter 5 kann die Spindel 7 in axialer Richtung von einer unteren Endlage, die in der linken Hälfte der Fig. 1 dargestellt ist, in eine obere Endlage, die in der rechten Hälfte der Fig. 1 veranschaulicht ist, bzw. durch entgegengesetztes Verdrehen in umgekehrter Richtung verstellt werden. Sowohl die obere als auch die untere Endlage sind durch nicht dargestellte elektrische Endschalter gesichert, bei deren Überfahren sich der Antrieb selbsttätig ausschaltet. Sollte die selbsttätige Abschaltung des Antriebes nicht funktionieren, z.B. weil einer der Schalter defekt ist, tritt die Schaltkupplung 18 durch Unterbrechen des Kraftflusses vom Antrieb (vom Antriebsmotor) über die Mutter 5 und Spindel 7 bis zur die Schaltkupplung 18 am Unterteil 1˝ des Gehäuses 1 führenden Feder 19 in Funktion. Der Aufbau der Schaltkupplung 18 ist folgender:
Die Schaltkupplung 18 weist eine mit in Längsrichtung der Spindel 7 verlaufenden Nuten 20 versehene Außenhülse 21 auf, in deren Nuten 20 die am Gehäuseunterteil 1˝ montierten Federn 19 ragen, so daß die Außenhülse 21 gegenüber dem Gehäuseunterteil 1˝ zwar in Richtung der Achse 10 der Spindel 7 verschiebbar, jedoch unverdrehbar ist. Die Außenhülse 21 ist aus vier übereinander angeordneten Teilen 22 bis 25 zusammengesetzt, u.zw. aus zwei mittleren Teilen 23, 24, die mit jeweils einem radial nach innen gerichteten Mittelflansch 23′, 24′ versehen sind, wobei die beiden Mittelflansche im Abstand 26 voneinander liegen. An der Ober- und Unterseite der von den mittleren Teilen 23, 24 gebildeten Hülse ist je eine Platte 22 und 25 angeordnet, die jeweils einen radial nach innen ragenden Flansch 22′, 25′ aufweist. Die vier Teile 22 bis 25 der Außenhülse 21 sind durch diese Teile durchsetzende Schrauben 27 zusammengehalten.

Die Schaltkupplung 18 weist weiters einen am unteren Endteil 17 der Spindel 7 mittels einer Paßfeder 28 drehfest und einer Halteplatte 29 auch in axialer Richtung unverschiebbar montierten Innenteil 30 auf, der ebenfalls hülsenartig ausgebildet ist. An der Außenseite des Innenteiles ist dieser nach der Art einer Vielnutverbindung mit einer Vielzahl von sich in Richtung der Achse 10 und die über die gesamte Höhe dieses Teiles erstreckenden Führungsnuten 31 versehen. Sowohl am oberen als auch am unteren Ende des Innenteiles 30 ist ein Gegenflansch 32, 33, der jeweils radial nach außen bis über die Flansche 22′, 25′ der Außenhülse 21 ragt, vorgesehen, so daß jeweils ein Flansch 22′, 25′ einen Gegenflansch 32, 33 in Richtung der Achse 10 der Spindel 7 gesehen übergreift. Die Gegenflansche 32, 33 sind an den Nuten 31 des Innenteiles in Richtung der Achse 10 der Spindel 7 beweglich, jedoch unverdrehbar geführt.

Zwischen den Gegenflanschen 32, 33 ist ein Mittelteil 34 angeordnet, der einen zwischen die Mittelflansche 23′, 24′ der Außenhülse 21 eingreifenden Gegen-Mittelflansch 35 aufweist. Der Mittelteil 34 ist infolge seines Eingriffes in die Nuten 31 des Innenteiles 30 gegenüber diesem unverdrehbar und mittels mehrerer radial angeordneter Stifte 36, die vom Mittelteil 34 in den Innenteil 30 hineinragen, auch in Richtung der Achse 10 unverschiebbar. Der Gegen-Mittelflansch 35, der zwischen die Mittelflansche 23′ und 24′ ragt, bildet eine Führung für die Außenhülse 21, so daß diese - unter bestimmten Voraussetzungen, die später noch erläutert werden - gegenüber dem Innenteil 30 verdrehbar, jedoch in Richtung der Achse 10 unverschiebbar ist.

An jedem Flansch 22′, 25′ der Außenhülse 21 sind Sägezahnringe 37, 38 vorgesehen, wobei sich die Sägezähne 39, 40 in Richtung zu den zwischen ihnen liegenden Gegenflanschen 32, 33 erstrecken. Die Sägeverzahnung des oberen Sägezahnringes 37 ist somit zu der des unteren Sägezahnringes 38 entgegengesetzt gerichtet und mit in entgegengesetzter Drehrichtung sperrenden Sägezähnen 39 ausgestattet, wobei jeder Sägezahn 39, 40 beider Sägezahnringe 37, 38 eine vertikale, d.h. sich in Richtung der Achse 10 der Spindel 7 erstreckende Flanke 41 aufweist.

An den Gegenflanschen 32, 33 sind Gegen-Sägezahnringe 42, 43 vorgesehen, die jeweils Sägezähne 44, 45 aufweisen, die mit den Sägezähnen 39, 40 der zugeordneten benachbarten Sägeverzahnungen in und außer Eingriff bringbar ist, u.zw. durch Verschieben der Gegenflansche 32, 33 in Richtung der Achse 10. Die beiden Gegenflansche 32, 33 werden durch elastische Mittel, wie z.B. Schraubenfedern 46, die durch Bohrungen des Gegen-Mittelteiles 34 hindurchgeführt sind, auseinandergepreßt, so daß sich, soferne keine anderen Kräfte einwirken, beide Sägeverzahnungen mit den Gegen-Sägeverzahnungen in Eingriff befinden.

Um eine Gegen-Sägeverzahnung außer Eingriff mit der Sägeverzahnung zu bringen, ist für jeden Gegenflansch 32, 33 ein Anschlag 47, 48 vorgesehen, der an dem Gegenflansch 32 bzw. 33 anliegt und über die von den Flanschen 22′, 23′ gebildete Ober- bzw. Unterseite der Schaltkupplung 18 ragt.

Die Funktion der Schaltkupplung ist folgende:
Gelangt die Spindel 7 zur unteren Endlage und versagt der Endschalter, wird die Spindel 7 weiter abwärts bewegt, bis der untere Anschlag 48 durch Auflaufen auf einen als Anlaufring ausgebildeten Gegenanschlag 49 am Gehäuse 1 in die in Fig. 2 dargestellte Position gedrückt wird, in der der untere Anschlag 48 den unteren Gegenflansch 33 so weit angehoben hat, bis dessen Gegen-Sägezahnring 43 außer Eingriff mit dem Sägezahnring 38 gelangt. Da die untere Sägeverzahnung und Gegen-Sägeverzahnung so gestaltet sind, daß die Vertikalflanken 41 die bei der Abwärtsbewegung der Spindel 7 auftretende Haltekraft (- die einer Drehbewegung der Spindel 7 um ihre Achse entgegenwirkt -) übertragen, ist die Abwärtsbewegung bei Außereingriff der Gegen-Sägeverzahnung mit der Sägeverzahnung zum Stillstand gekommen, und die Spindel kann durch Mitnahme über die Mutter in Drehung versetzt werden, ohne daß Schäden am Spindelantrieb auftreten. Die obere Sägeverzahnung, die entgegengesetzt gerichtete Sägezähne 39, 44 aufweist und damit für die Aufwärtsbewegung der Spindel zuständig ist, dreht sich durch axiales Abfedern des oberen Gegenflansches 32 ähnlich einer Ratsche durch, so daß auch hier der Kraftfluß zwischen dem Innenteil 30 und der Außenhülse 21 der Schaltkupplung 18 unterbrochen ist, u.zw. so lange, bis eine Bewegungsumkehr stattfindet.

Bei Bewegungsumkehr, also Drehrichtungsumkehr der Spindel 7, kommen die Vertikalflanken 41 der Sägezähne 39 des oberen Sägezahnringes 37 mit den Vertikalflanken 41 der Sägezähne 44 des oberen Gegen-Sägezahnringes 42 in Anlage und der Kraftfluß ist wiederhergestellt, so daß die Spindel 7 wiederum gegen Verdrehen gegenüber dem Gehäuse 1 gesichert ist und aufwärtsbewegt wird. Bei dieser Aufwärtsbewegung gelangt die untere Gegen-Sägeverzahnung mit der Sägeverzahnung wieder in Eingriff.

Gelangt die Spindel 7 in die obere Endposition und versagt auch hier der Endschalter, gelangt in gleicher Art und Weise die obere Sägeverzahnung außer Eingriff mit der oberen Gegen-Sägeverzahnung und die untere Sägeverzahnung dreht durch.

Gemäß der in Fig. 5 dargestellten Ausführungsform ist die Spindel 7′ der drehangetriebene Teil und ist die Mutter gegenüber der Spindel 7′ in Richtung der Längsachse 10 der Spindel 7′ höhenverstellbar, wobei sich die Last am oberen Ende eines die Spindel 7′ umgebenden Rohres 51, das an der Mutter 5′ befestigt ist, abstützt, u.zw. über ein Axiallager 52, so daß das Rohr gegenüber der Lastaufnahme 53, die auf dem Axiallager 52 ruht, in Drehbewegung versetzt werden kann.

Der Aufbau der Schaltkupplung 18, die in diesem Fall zwischen der Mutter 5′ und den am Gehäuse 1 als Verdrehsicherung der Mutter angeordneten Federn 19 vorgesehen ist, ist analog zu dem der Schaltkupplung, wie sie in den Fig. 1 bis 4 dargestellt ist.

Gemäß der in Fig. 6 dargestellten Ausführungsform ist die Mutter 5˝ der angetriebene Teil des Spindelantriebes und die Spindel 7" der axial verschiebbare Teil. Die Schaltkupplung 18 ist hier zwischen der Spindel 7˝ und dem Gehäuse 1 angeordnet, wobei die Spindel 7˝ einen zentralen axialen Hohlraum 54 aufweist, in dem zentrisch eine Betätigungsstange 55 eingesetzt ist. Diese Betätigungsstange 55 ist gegenüber der Spindel 7˝ mittels einer Feder 56 unverdrehbar, jedoch in Richtung der Achse 10 der Spindel 7˝ verschiebbar, wobei die axiale Bewegungsmöglichkeit durch Anschlagen der Feder 56 an den Enden 57, 58 der in die Spindel 7˝ eingearbeiteten Nut 59 begrenzt ist.

Der Aufbau der Schaltkupplung 18 ist analog zu der in den Fig. 1 bis 4 dargestellten Schaltkupplung, jedoch ist die Außenhülse 21 am Gehäuse 1 starr befestigt, beispielsweise mittels Schrauben 60, die dann letzten Endes die Verdrehsicherung der Spindel 7˝ gegenüber dem Gehäuse 1 bilden. Ein Unterschied zu der in Fig. 2 dargestellten Schaltkupplung besteht in der Weglassung des Mittelflansches 23′, 24′ und des Mittelgegenflansches 35, da diese Teile bei ortsfester Anordnung der Schaltkupplung 18 nicht mehr erforderlich sind.

Eine Abwärtsbewegung der Spindel 7˝ bringt das untere flanschartig erweiterte Ende 61 der Spindel 7˝ mit dem oberen Anschlag 47 in Kontakt und bewirkt dadurch ein Ausrücken der oberen Sägeverzahnung-Gegen-Sägeverzahnung (die in diesem Fall für die Abwärtsbewegung zuständig ist). Eine Aufwärtsbewegung der Spindel 7˝ ist so lange möglich, bis die Betätigungsstange 55 aus der Spindel 7˝ zur Gänze ausgefahren ist und die am unteren Ende der Betätigungsstange 55 vorgesehene Scheibe 62 mit dem unteren Anschlag 48 in Kontakt kommt und die untere Sägeverzahnung-Gegen-Sägeverzahnung außer Eingriff bringt.

In Fig. 7 ist eine Ausführungsform dargestellt, bei der, so wie in Fig. 5 veranschaulicht, die Mutter 5′ der axial bewegliche Teil und die Spindel 7′ der antreibbare Teil ist. Die Schaltkupplung 18 ist hier zwischen dem Schneckenrad 4 und dem unteren Endteil 17 der Spindel 7′ vorgesehen. Ihr Aufbau ist analog zu der in Fig. 6 dargestellten Schaltkupplung 18. Ihre Anschläge 47, 48 werden durch die Mutter 5′ betätigt, u.zw. der obere Anschlag 47 durch direktes Anfahren der Mutter 5′ an diesem und der untere Anschlag 48 durch Anfahren der Mutter an eine Betätigungseinrichtung 63, die aus einer C-förmig gebildeten Betätigungsstange besteht und außenseitig des Gehäuses 1 angeordnet ist und nur mit ihren Enden in das Gehäuse ragt.

In Fig. 8 ist eine Variante der Schaltkupplung 18′ dargestellt, bei der die Sägeverzahnungen und Gegen-Sägeverzahnungen so gestaltet sind wie bei der in Fig. 2 dargestellten Schaltkupplung 18. Die Außenhülse 21 der Schaltkupplung 18′ ist wiederum am Gehäuse 1 des Spindelantriebes axial verschiebbar, jedoch unverdrehbar mittels einer oder mehrerer Federn 19 geführt. An der Ober- und Unterseite dieser Außenhülse 21 ist jeweils eine Ringplatte 64 mit jeweils drei radial nach außen gerichteten Ansätzen 65 aufgelegt und mittels die Ansätze durchsetzender Schrauben 66 an der Außenhülse 21 befestigt. Zwischen den Ansätzen 65 der Ringplatte 64 sind Ausnehmungen 67 vorgesehen, durch die die Außenhülse 21 mit axial gerichteten Fortsätzen 68 nach oben bzw. nach unten hindurchragt.

Im Inneren der Außenhülse 21 sind zwei im Querschnitt L-förmige Ringkörper 69, 70 eingesetzt, die mit ihren vertikalen Wandteilen an der Innenseite der Außenhülse 21 anliegen und zu den Fortsätzen 68 der Außenhülse 21 parallel gerichtete Fortsätze 71 aufweisen, die ebenfalls durch die Ausnehmungen 68 der Ringplatten 64 hindurchragen. Diese Ringkörper 69, 70 sind in axialer Richtung beweglich, jedoch durch die Fortsätze 71 gegenüber der Außenhülse 21 unverdrehbar. Sie tragen jeweils an ihrem horizontal gerichteten Flanschteil 72 einen Sägezahnring 73, 74, denen jeweils ein Gegen-Sägezahnring 75, 76 gegenüberliegt. Die Sägezahnringe 75, 76 sind an einer am unteren Ende 17 der Spindel 7 aufgezogenen Innenhülse 78 angeordnet. Die beiden Ringkörper 69, 70 werden durch Schraubenfedern 46 auseinandergepreßt, so daß die Sägeverzahnungen der Sägezahnringe 73, 74 in die Gegen-Sägeverzahnungen der Gegen-Sägezahnringe 75, 76 eingreifen.

Die Innenhülse 78 ist zweiteilig ausgebildet, wobei die beiden Teile 78′, 78˝ durch Schrauben 79, die in einen Absatz am unteren Endteil 17 der Spindel eingreifen, gegeneinander verspannt und an der Spindel 7 in axialer Richtung fixiert sind. Die Innenhülse 78 ist gegenüber der Spindel 7 mittels einer Paßfeder 28 gegen Verdrehen gesichert. Die Gegen-Sägezahnringe 75, 76 stützen sich jeweils an radial nach außen gerichteten Flanschen der Innenhülse 78 ab.

Bei dieser Ausführungsform sind somit die Sägezahnringe 73, 74 der Außenhülse 21 axial verschiebbar, d.h. in und außer Eingriff bringbar mit den Gegen-Sägezahnringen 75, 76, u.zw. durch Auflaufen der über die Außenhülse 21 vorstehenden Fortsätze 71, die in diesem Fall als Anschläge wirken, an Gegenanschläge am Gehäuse 1 bzw. an der Mutter 5.

Für hohe Lasten haben sich Sägeverzahnungen mit Vertikalflanken 41, d.h. mit sich in Richtung der Achse 10 erstreckenden Flanken, als günstigste Verzahnung erwiesen. Selbstverständlich können auch andere Zahnformen, die in die eine Drehrichtung sperren und in die andere Drehrichtung freigeben, vorgesehen werden, z.B. können auch Konstruktionen ähnlich einem Freilauf verwirklicht werden.

## Patentansprüche

1. Spindelantrieb mit einer Spindel (7; 7'; 7") und einer Mutter (5; 5'; 5"), wobei einer dieser beiden Teile mittels eines Antriebes antreibbar und der andere Teil in Richtung der Achse (10) der Spindel (7; 7'; 7") in eine Endposition bewegbar ist, der in axialer Richtung bewegbare Teil an einer Verdrehsicherung (19; 56, 60) geführt ist und eine Schaltkupplung (18; 18') im Kraftfluß zwischen der Verdrehsicherung (19; 56, 60) und dem Antrieb eingebaut ist, wobei
- die Schaltkupplung (18; 18') eine Außenhülse (21) aufweist, die mit zwei an ihr unverdrehbar angeordneten Sägezahnringen (37, 38; 73, 74) versehen ist, deren Sägeverzahnungen einander entgegengesetzt gerichtet sind und mit in entgegengesetzter Drehrichtung sperrenden Sägezähnen (39, 40) ausgestattet sind,
- die Schaltkupplung (18; 18') weiters einen innerhalb der Außenhülse (21) liegende Innenteil (30; 78) aufweist, mit dem zwei Gegen-Sägezahnringe (42, 43; 75, 76) mit jeweils einer zu einer der Sägeverzahnungen der Sägezahnringe (37, 38; 73, 74) in und außer Eingriff bringbaren Gegen-Sägeverzahnung unverdrehbar verbunden sind,
- jede der beiden Gegen-Sägeverzahnungen mit den zugehörigen Sägeverzahnungen mittels elastischer Mittel (46) in Eingriffstellung gepreßt ist und
- entweder einer der Sägezahnringe (37, 38, 73, 74) oder einer der Gegen-Sägezahnringe (42, 43, 75, 76) mit einem Anschlag (47, 48; 71) bei sich einer Endposition näherndem axial beweglichen Teil aus der Eingriffstellung in Richtung der Achse (10) der Spindel (7; 7'; 7") bis in eine Außer-Eingriffstellung verschiebbar ist,
dadurch gekennzeichnet, daß die Schaltkupplung (18, 18') als eigene integrale, Von der Außenhülse (21) und dem Innenteil (30, 55, 78) begrenzte Baueinheit ausgebildet ist, wobei die Gegensägezahnringe (42, 43, 75, 76) am Innenteil (30, 55, 17, 78') entweder längsverschieblich geführt oder an diesem befestigt sind.

2. Spindelantrieb nach Anspruch 1, dadurch gekennzeichnet, daß die Schaltkupplung (18) am in axialer Richtung bewegbaren Teil zwischen diesem und der Verdrehsicherung (19) angeordnet ist.

3. Spindelantrieb nach Anspruch 2, dadurch gekennzeichnet, daß die Außenhülse (21) an einem den Spindelantrieb umgebenden zylindrischen Gehäuse (1) über im Inneren des Gehäuses (1) angeordnete, die Verdrehsicherung (19) bildende Federn oder Nuten geführt ist.

4. Spindelantrieb nach Anspruch 3, dadurch gekennzeichnet, daß das Gehäuse (1) einen Boden und einen Deckel aufweist und im Boden und/oder im Deckel ein mit dem Anschlag (48) in Kontakt gelangender, als Anlaufring (49) ausgebildeter Gegenanschlag vorgesehen ist.

5. Spindelantrieb nach einem oder mehreren der Ansprüche 1 bis 4, dadurch gekennzeichnet, daß der drehbare Teil die Mutter (5, 5") und der in axialer Richtung bewegbare Teil die Spindel (7, 7") ist.

6. Spindelantrieb nach Anspruch 5, dadurch gekennzeichnet, daß die Schaltkupplung (18) ortsfest angeordnet ist und ein den Anschlag (47) kontaktierender Gegenanschlag (61) von einem Ende der Spindel (7") und ein weiterer, den zweiten Anschlag (48) kontaktierender zweiter Gegenanschlag (62) von einer an der Spindel (7") in axialer Richtung verschiebbar gelagerten Betätigungsstange (55) gebildet wird, die an der Spindel (7") zwischen zwei im dem Hub der Spindel entsprechenden Abstand liegenden Endpositionen (57, 58) verschiebbar ist.

7. Spindelantrieb nach einem oder mehreren der Ansprüche 1 bis 4, dadurch gekennzeichnet, daß der drehbare Teil die Spindel (7') und der axial bewegbare Teil die Mutter (5') ist.

8. Spindelantrieb nach Anspruch 7, dadurch gekennzeichnet, daß die Außenhülse (21) der Schaltkupplung drehfest mit einem Antriebszahnrad (4) verbunden ist und der Innenteil der Schaltkupplung (18) von einem die Spindel in axialer Richtung verlängernden Endteil (17) gebildet ist und daß ein einen Anschlag (47) kontaktierender Gegenanschlag an der Mutter (5') und ein einen weiteren Anschlag (48) kontaktierender Gegenanschlag von einer mittels der Mutter (5') betätigten Betätigungseinrichtung (63) gebildet ist.

9. Spindelantrieb nach einem oder mehreren der Ansprüche 1 bis 8, dadurch gekennzeichnet, daß an dem in Richtung der Achse (10) der Spindel (7) bewegbaren Teil eine Lastauflage (12; 53) angeordnet ist, die am axial bewegbaren Teil mittels eines Axiallagers (16) drehbar abgestützt ist.

10. Spindelantrieb nach einem oder mehreren der Ansprüche 1 bis 9, dadurch gekennzeichnet, daß die Außenhülse (21) mindestens einen zwischen den an bei den Enden angeordneten Flanschen (22', 25') liegenden Mittelflansch (23', 24') aufweist, mit dem sie am Innenteil (30) verdrehbar, jedoch axial unverschiebbar gelagert ist.

11. Spindelantrieb nach Anspruch 10, dadurch gekennzeichnet, daß der Mittelflansch (23', 24') zweigeteilt ausgebildet ist und einen am Innenteil (30) starr angeordneten Gegen-Mittelflansch (35) beiderseitig umschließt.

12. Spindelantrieb nach den Ansprüchen 10 und 11, dadurch gekennzeichnet, daß die Außenhülse (21) aus vier miteinander in axialer Richtung verspannten Bauteilen (22 bis 25) gebildet ist, von dem einer einen ersten Flansch (22'), einer einen ersten Mittelflansch (23'), einer einen zweiten Mittelflansch (24') und einer einen zweiten Endflansch (25') trägt.

## Claims

1. A spindle drive including a spindle (7; 7'; 7") and a nut (5; 5'; 5"), wherein one of these two parts is drivable by means of a drive and the other part is movable in the direction of the axis (10) of the spindle (7; 7'; 7") into an end position, the part which is movable in the axial direction is guided on a rotation locking means (19; 56, 60) and a clutch (18; 18') is installed in the flow of force between the rotation locking means (19; 56, 60) and the drive, wherein
- the clutch (18; 18') has an outer sleeve (21) provided with two saw-tooth rings (37, 38; 73, 74) irrotationally arranged thereon, whose saw toothings are oppositely directed and are provided with saw teeth (39, 40) locking in the opposite rotational direction,
- the clutch (18, 18') furthermore has an inner part (30, 78) located within the outer sleeve (21), with which inner part two counter saw tooth rings (42, 43; 75, 76), each having a counter saw toothing capable of being engaged and disengaged with one of the saw toothings of the saw tooth rings (37, 38; 73, 74), are irrotationally connected,
- each of the two counter saw toothings is pressed into engagement position with the pertaining saw toothings by elastic means (46), and
- either one of the saw tooth rings (37, 38, 73, 74) or one of the counter saw tooth rings (42, 43, 75, 76) is displaceable with a stop (47, 48; 71), when the axially movable part approaches an end position, from the engagement position in the direction of the axis (10) of the spindle (7; 7'; 7") as far as into a disengagement position,
characterised in that the clutch (18, 18') is designed as a separate, integral structural unit delimited by the outer sleeve (21) and the inner part (30, 55, 78), the counter saw tooth rings (42, 43, 75, 76) being either longitudinally displaceably guided on the inner part (30, 55, 17, 78') or fastened to the same.

2. A spindle drive according to claim 1, characterised in that the clutch (18) is arranged on the axially movable part between the same and the rotation locking means.

3. A spindle drive according to claim 2, characterised in that the outer sleeve (21) is guided on a cylindrical housing (1) surrounding the spindle drive via springs or grooves, which are arranged in the interior of the housing (1) and form the rotation locking means (19).

4. A spindle drive according to claim 3, characterised in that the housing (1) has a bottom and a lid, and a counter-stop is provided in the bottom and/or in the lid so as to get into contact with the stop (48), the counter-stop being designed as a stop ring.

5. A spindle drive according to one or several of claims 1 to 4, characterised in that the rotatable part is the nut (5, 5") and the axially movable part is the spindle (7, 7").

6. A spindle drive according to claim 5, characterised in that the clutch (18) is stationarily arranged and that a counter-stop (61) contacting the stop (47) is formed by one end of the spindle (7") and a further, second, counter-stop (62) contacting the second stop (48) is formed by an actuation rod (55) mounted so as to be displaceable in the axial direction, which actuation rod is displaceable on the spindle (7") between two end positions (57, 58) located at a distance corresponding to the stroke of the spindle.

7. A spindle drive according to one or several of claims 1 to 4, characterised in that the rotatable part ist the spindle (7') and the axially movable part is the nut (5').

8. A spindle drive according to claim 7, characterised in that the outer sleeve (21) of the clutch is irrotationally connected to a driving toothed wheel (4) and the inner part of the clutch (18) is formed by an end part (17) extending the spindle in the axial direction, and that a counter-stop contacting a stop (47) is formed on the nut (5'), and a counter-stop contacting a further stop (48) is formed by an actuation means (63) actuated by the nut (5').

9. A spindle drive according to one or several of claims 1 to 8, characterised in that a load support (12; 53) is arranged on the part that is movable in the direction of the axis (10) of the spindle (7), which load support is rotatably supported on the axially movable part by means of an axial bearing (16).

10. A spindle drive according to one or several of claims 1 to 9, characterised in that the outer sleeve (21) includes at least one middle flange (23', 24') located between the flanges (22', 25') arranged on the two ends, the outer sleeve being mounted on the inner part (30) by the middle flange so as to be rotatable, but axially undisplaceable.

11. A spindle drive according to claim 10, characterised in that the middle flange (23', 24') is designed in two parts and on both sides surrounds a counter middle flange (35) rigidly arranged on the inner part (30).

12. A spindle drive according to claims 10 and 11, characterised in that the outer sleeve (21) is formed by four structural parts (22 to 25) braced together in the axial direction, one of them carrying a first flange (22'), one carrying a first middle flange (23'), one carrying a second middle flange (24') and one carrying a second end flange (25').

## Revendications

1. Mécanisme de levage à vis comportant une vis (7; 7'; 7")et un écrou (5; 5'; 5"), mécanisme dans lequel l'une de ces deux pièces peut être entrainé au moyen d'un mécanisme d'entrainement et l'autre pièce peut se déplacer dans la direction de l'axe (10) de la vis (7; 7'; 7") pour venir dans une position d'extrémité, dans lequel la pièce mobile dans la direction axiale est guidée par un organe de sécurité à l'égard d'un entrainement en rotation (19; 56, 60) et dans lequel un embrayage (18; 18') est monté sur le chemin de transmission de la force entre l'organe de sécurité à l'égard d'un entrainement en rotation (19; 56, 60) et le mécanisme d'entrainement, mécanisme dans lequel
- l'embrayage (18; 18') présente un fourreau extérieur (21) muni de deux couronnes à dents de scie (37, 38; 73, 74) qui sont disposées sans possibilité de rotation et dont les dentures sont orientées en sens opposé l'une à l'autre et sont équipées de dents de scie (39, 40) interdisant la rotation en sens respectivement opposés,
- l'embrayage (18; 18') présente en outre une partie intérieure (30; 78) qui est située à l'intérieur du fourreau extérieur (21) et avec laquelle deux contre-couronnes à dents de scie (42, 43; 75, 76), présentant chacune une contre-denture qui peut être amenée en prise et hors prise avec l'une des dentures des couronnes à dents de scie (37, 38, 73, 74), sont reliées sans liberté de rotation relative,
- chacune des deux contre-dentures est, grâce à des moyens élastiques (46), pressée pour venir en position de prise avec les dentures correspondantes et
- lorsque la pièce mobile dans le sens axial s'approche d'une position d'extrémité, soit l'une des couronnes à dents de scie (37, 38, 73, 74) soit l'une des contre-couronnes à dents de scie (42, 43, 75, 76) peut, sous l'action d'une butée (47, 48; 71), coulisser dans la direction de l'axe (10) de la vis (7, 7', 7") pour sortir de la position en prise et venir dans une position hors prise,
mécanisme caractérisé par le fait que l'embrayage (18, 18') est conçu sous forme d'un organe propre, autonome, limité par le fourreau extérieur (21) et par la partie intérieure (30, 55, 78), étant précisé que les contre-couronnes à dents de scie (43, 43, 75, 76) sont soit guidées en coulissement longitudinal contre la partie intérieure (30, 55, 17, 78') soit fixées contre cette partie intérieure.

2. Mécanisme de levage à vis selon la revendication 1, caractérisé par le fait que l'embrayage (18) est disposé sur la pièce mobile en direction axiale, entre cette pièce et l'organe de sécurité à l'égard d'un entrainement en rotation.

3. Mécanisme de levage à vis selon la revendication 2, caractérisé par le fait que le fourreau extérieur (21) est guidé sur un carter cylindrique (1), entourant le mécanisme de levage à vis, par l'intermédiaire de ressorts ou de rainures disposés à l'intérieur du carter (1) et constituant l'organe de sécurité à l'égard d'un entrainement en rotation.

4. Mécanisme de levage à vis selon la revendication 3, caractérisé par le fait que le carter (1) présente un plancher et un couvercle et que sur le plancher et/ou sur le couvercle est prévue une contre-butée qui vient en contact avec la butée (48) et qui est conçue sous forme de couronne d'appui (49).

5. Mécanisme de levage à vis selon une ou plusieurs des revendications 1 à 4, caractérisé par le fait que la pièce rotative est l'écrou (5, 5") et que la pièce mobile en direction axiale est la vis (7, 7").

6. Mécanisme de levage à vis selon la revendication 5, caractérisé par le fait que l'embrayage (18) est disposé fixe en position et qu'une contre-butée (61), qui vient en contact avec la butée (47), est formée d'une extrémité de la vis (7") et qu'une autre, seconde, contre-butée (62), qui vient en contact avec la seconde butée (48), est formée d'une tige de manoeuvre (55) qui a sa portée sur la vis (7") avec liberté de coulissement en direction axiale et qui peut coulisser sur la vis (7") entre deux positions d'extrémité (57, 58) situées à une distance correspondant à la course de la vis.

7. Mécanisme de levage à vis selon l'une ou plusieurs des revendications 1 à 4, caractérisé par le fait que la pièce rotative est la vis (7') et que la pièce mobile en direction axiale est l'écrou (5').

8. Mécanisme de levage à vis selon la revendication 7, caractérisé par le fait que le fourreau extérieur (21) de l'embrayage est relié, sans liberté de rotation relative, avec une roue à vis sans fin d'entrainement (4) et que la partie intérieure de l'embrayage (18) est formée d'une pièce d'extrémité (17) qui prolonge la vis en direction axiale et par le fait qu'une contre-butée, qui vient en contact avec une butée (47) est formée sur l'écrou (5') et qu'une contre-butée qui vient en contact avec l'autre butée (48) est formée par un dispositif de manoeuvre (63) manoeuvré au moyen de l'écrou (5').

9. Mécanisme de levage à vis selon l'une ou plusieurs des revendications 1 à 8, caractérisé par le fait que sur la pièce mobile dans la direction de l'axe (10) de la vis (7) est disposé un support de charge (12; 53) qui s'appuie, avec liberté de rotation relative et au moyen d'un roulement axial (16), sur la pièce mobile en direction axiale.

10. Mécanisme d'entrainement à vis selon l'une ou plusieurs des revendications 1 à 9, caractérisé par le fait que le fourreau extérieur (21) présente au moins un collet médian (23', 24') qui est situé entre les collets (22', 25') disposés aux deux extrémités et par lequel ce fourreau porte sur la partie intérieure (30) avec liberté de rotation relative mais sans liberté de coulissement axial.

11. Mécanisme d'entrainement à vis selon la revendication 10, caractérisé par le fait que le collet médian (23', 24') est conçu en deux parties et qu'il enserre, des deux côtés, un contre-collet médian (35) rigidement disposé sur la partie intérieure (30).

12. Mécanisme d'entrainement à vis selon l'une des revendications 10 et 11, caractérisé par le fait que le fourreau extérieur (21) est formé de quatre composants (22 à 25) qui sont bridés l'un avec l'autre en direction axiale et dont l'un présente un premier collet (22'), l'un un premier collet médian (23'), l'un un second collet médian (24') et l'un une second collet d'extrémité (25').
